# EUROPÄISCHE PATENTANMELDUNG

(11) **EP 0 980 876 A1**
(43) Veröffentlichungstag der Anmeldung: **23.02.2000**
(21) Anmeldenummer: 99115112.7
(22) Anmeldetag: 09.08.1999
(51) Int. Cl.: C08F 6/00

(54) **Verfahren zur Herstellung von lagerstabilen Saatpolymerisaten**

(30) Priorität: 20.08.1998 DE 19837752
(71) Anmelder: Bayer Aktiengesellschaft, 51368 Leverkusen (DE)
(72) Erfinder: Halle, Olaf, Dr., 51061 Köln (DE); Strüver, Werner, Dr., 51375 Leverkusen (DE); Hinderer, Jürgen, Dr., 51381 Leverkusen (DE)

(57) **Zusammenfassung**

Die Erfindung betrifft ein Verfahren zur Herstellung von lagerstabilen kugelförmigen Polymerisaten durch Polymerisation von gelatineverkapselten Monomertröpfchen dadurch gekennzeichnet, daß man die Perlpolymerisate unmittelbar nach deren Polymerisation auf einen Restfeuchtegehalt von <1 Gew.-% trocknet.

## Beschreibung

Die Erfindung betrifft ein Verfahren zur Herstellung von lagerstabilen kugelförmigen Polymerisaten durch Polymerisation von gelatineverkapselten Monomertröpfchen dadurch gekennzeichnet, daß man die Perlpolymerisate unmittelbar nach der Polymerisation trocknet, sowie die mit Gelatine verkapselten Polymerisate mit einem Restwassergehalt < 1 Gew.-%.

In jüngerer Zeit haben Ionenaustauscher mit möglichst einheitlicher Teilchengröße (im folgenden "monodispers" genannt) zunehmend an Bedeutung gewonnen, weil bei vielen Anwendungen aufgrund der günstigeren hydrodynamischen Eigenschaften eines Austauscherbettes aus monodispersen Ionenaustauschern wirtschaftliche Vorteile erzielt werden können, vgl. EP-A 0 046 535 und EP-A 0 051 210.

Monodisperse Ionenaustauscher können durch Funktionalisieren von monodispersen Perlpolymerisaten erhalten werden. Eine der Möglichkeiten, monodisperse Perlpolymerisate herzustellen besteht darin, durch spezielle Verdüsungstechniken monodisperse Monomertröpfchen zu erzeugen und diese dann durch Polymerisation auszuhärten. Die Ausbildung einheitlicher Tröpfchen kann durch Schwingungsanregung unterstüzt werden; so wird in der EP-A 0 051 210 ein Verfahren zur Herstellung kugelförmiger Teilchen mit einheitlicher Teilchengröße beschrieben, bei dem einheitliche Monomertröpfchen durch Schwingungsanregung eines laminaren Monomerstroms erzeugt werden. Soll die Monodispersität der Monomertröpfchen bei der Polymerisation erhalten bleiben, so muß die Agglomeration und Koaleszenz sowie die Neubildung von Tröpfchen sicher ausgeschlossen werden. Eine besonders wirksame Methode zur Verhinderung von Koaleszenz und Neubildung von Tröpfchen besteht in der Mikroverkapselung der Tröpfchen gemäß EP-A 0 046 535.

Eine weitere der Möglichkeiten, monodisperse Perlpolymerisate herzustellen besteht im sogenannten seed/feed-Verfahren, wonach ein monodisperses Polymerisat ("Saat") im Monomer gequollen und dieses dann polymerisiert wird. Seed/feed-Verfahren werden beispielsweise in den EP-A 0 098 130 und EP-A 0 101 943 beschrieben. Eine Möglichkeit zur besonders exakten Übertragung der Korngrößenverteilung des Saatpolymers in das Perlpolymerisat ist in DE 19 634 393 beschrieben. Hierbei wird ein mikroverkapseltes Polymerisat als Saat eingesetzt.

Nachteilig an den im oben genannten Stand der Technik beschriebenen Saaten mit gelatinehaltiger Kapselwand im sogenannten seed/feed-Verfahren ist deren Lagerstabilität. So führt eine mit Gelatine verkapselte Saat, welche längere Zeit mit unkontrolliertem Wassergehalt gelagert wurde (z.B. 2 Wochen bei 25 °C), im seed/feed-Verfahren zu einem Perlpolymerisat, welches im Gegensatz zur Saat oberflächliche Aufwachsungen aufweist.

Die Aufgabe der vorliegenden Erfindung bestand folglich darin, lagerstabile, mit Gelatine verkapselte Saat herzustellen, die über längere Zeit gelagert werden kann, so daß diese im seed/feed-Vefahren eingesetzt werden kann, ohne daß in einem späteren Verarbeitungsschritt Perlpolymerisate mit oberflächlichen Aufwachsungen entstehen.

Die Aufgabe wurde durch Trocknung der mit Gelatine verkapselten Saat unmittelbar nach der Polymerisation auf einen Restwassergehalt <1 Gew.-% gelöst. Eine so hergestellte Saat führte selbst nach einjähriger Lagerung bei 25°C und sich erst daran anschließender Verarbeitung in einem seed/feed-Verfahren zu keinen Oberflächenbelegungen auf den daraus hergestellten Perlpolymerisaten.

Gegenstand der Erfindung ist also ein Verfahren zur Herstellung von lagerstabilen kugelförmigen Polymerisaten durch Polymerisation von gelatineverkapselten Monomertröpfchen in einer wäßrigen Phase, dadurch gekennzeichnet, daß das Polymerisat unmittelbar nach der Polymerisation auf einen Restwassergehalt <1 Gew.-% getrocknet wird.

Unter Monomer im Sinne der Erfindung werden monoethylenisch ungesättigte Verbindungen und multiethylenisch ungesättigte Verbindungen, die in der Regel als Vernetzer wirken, sowie deren Mischungen, verstanden. Als monoethylenisch ungesättigte Verbindungen sind z.B. Styrol, Vinyltoluol, Ethylstyrol, alpha-Methylstyrol, Chlorstyrol, Chlormethylstyrol, Acrylsäure, Methacrylsäure, Acrylsäurester, Methacrylsäureester, Acrylnitril, Methacrylnitil, Acrylamid und Methacrylamid geeignet. Bevorzugt sind Styrol sowie Mischungen aus Styrol und den vorgenannten Monomeren. Beispiele für multifunktionelle ethylenisch ungesättigte Verbindungen sind Divinylbenzol, Divinyltoluol, Trivinylbenzol, Divinylnaphtalin, Trivinylnaphtalin, Diethylenglycoldivinylether, 1,7-Octadien, 1,5-Hexadien, Ethylenglycoldimethacrylat, Triethylenglycoldimethacrylat, Trimethylolpropan-trimethacrylat, Allylmethacrylat und Methylen-N,N*'*-bisacrylamid. Die multiethylenisch ungesättigten Verbindungen werden im allgemeinen in Mengen von 0,05-10, vorzugsweise 0,1-5, besonders bevorzugt 0,1-2 Gew.-%, bezogen auf Monomer eingesetzt. Die Art der multiethylenisch ungesättigten Verbindung (Vernetzer) wird natürlich im Hinblick auf die spätere Verwendung des kugelförmigen Polymerisats ausgewählt. So sind beispielsweise Acrylat- bzw. Methacrylat-Vernetzer ungeeignet, wenn aus dem Polymerisat ein Kationenaustauscher durch Sulfonierung hergestellt werden soll, da die Esterbindung unter den Sulfonierungsbedingungen gespalten wird. Divinylbenzol ist in vielen Fällen, insbesondere auch zur Herstellung stark saurer Kationenaustauscher, geeignet. Für die meisten Anwendungen sind kommerzielle Divinylbenzolqualitäten, die neben den Isomeren des Divinylbenzols auch Ethylvinylbenzol enthalten, ausreichend. Die Monomere bzw. die Monomergemische sollen in der wäßrigen Phase weitgehend unlöslich sein. In Wasser teilweise lösliche Monomere, wie Acrylsäure, Methacrylsäure und Acrylnitril werden daher im Gemisch mit wasserunlöslichen Monomeren verwendet. Es ist auch möglich, die Löslichkeit der Monomeren in der wäßrige Phase durch Salzzusatz zu erniedrigen.

Zur Mikroverkapselung der Monomertröpfchen mit Gelatine können verschiedene Methoden angewandt werden. Insbesondere wird Gelatine als Koazervat oder Komplexkoazervat auf die Monomertröpfchen aufgebracht. Bei der Gelatineverkapselung von Monomertröpfchen mit Hilfe der Koazervation wird in wäßriger Phase gelöste Gelatine mit Hilfe eines wasserlöslichen Salzes als wasserhaltige Gelatinephase ausgefällt. Die wasserhaltige Gelatinephase lagert sich dann auf der Oberfläche der Monomertröpfchen an. Zum Ausfällen der wasserhaltigen Gelatinephase ist Natriumsulfat besonders gut geeignet. Unter gelatinehaltigen Kompexkoazervaten im Sinne der Erfindung werden vor allem Kombinationen von Gelatine und synthetischen Polyelektrolyten verstanden. Geeignete synthetische Polyelektrolyte sind Copolymerisate mit eingebauten Einheiten von z.B. Maleinsäure, Acrylsäure, Methacrylsäure, Acrylamid und Methacrylamid. Gelatinehaltige Kapseln, welche über Koazervation oder Komplexkoazervation zugänglich sind, können mit üblichen Härtungsmitteln wie z.B. Formaldehyd oder Glutardialdehyd gehärtet werden. Die Verkapselung von Monomertröpfchen mit Gelatine, gelatinehaltigen Koazervaten und gelatinehaltigen Komplexkoazervaten wird in der EP-A 0 046 535 eingehend beschrieben.

Die verkapselten Monomertröpfchen enthalten Initiatoren zur Auslösung der Polymerisation. Für das erfindungsgemäße Verfahren geeignete Initiatoren sind z.B. Peroxyverbindungen wie Dibenzoylperoxid, Dilaurylperoxid, Bis (p-chlorbenzoyl)-peroxid, Dicyclohexylperoxydicarbonat, tert.-Butylperoctoat, tert.-Butylperoxy-2-ethyl-hexanoat, 2,5-Bis(2-ethylhexanoylperoxy)-2,5-dimethylhexan und tert.-Amyl-peroxy-2-ethylhexan, desweiteren Azoverbindungen wie 2,2'-Azobis(isobutyronitril) und 2,2'-Azobis(2-methylisobutyronitril). Die Initiatoren werden im allgemeinen in Mengen von 0.05 bis 2.5 Gew.-%, vorzugsweise 0.1 bis 1.5 Gew.-%, bezogen auf das Monomer oder die Monomermischung, angewendet.

Als weitere Zusätze in den Monomertröpfchen können sogenannte Porogene verwendet werden, um im kugelförmigen Polymerisat eine makroporöse Struktur zu erzeugen. Hierfür sind organische Lösungsmittel geeignet, die das gebildete Polymerisat schlecht lösen bzw. quellen. Beispielhaft seien genannt Hexan, Octan, Isooctan, Isododecan, Methylethylketon und Octanol.

Das verkapselte Monomertröpfchen kann auch bis zu 30 Gew.-% vernetztes oder unvernetztes Polymer enthalten. Bevorzugte Polymere leiten sich aus den vorgenannten Monomeren, besonders bevorzugt von Styrol, ab.

Die mittlere Teichengröße der verkapselten Monomertröpfchen beträgt 10 bis 1000 µm, vorzugsweise 100 bis 1000 µm. Das erfindungsgemäße Verfahren ist auch zur Herstellung monodisperser kugelförmiger Polymerisate, insbesondere solcher gemäß EP-A 0 046 535, gut geeignet.

Die wäßrige Phase kann einen gelösten Polymerisationsinhibitor enthalten. Als Inhibitoren kommen sowohl anorganische als auch organische Stoffe in Frage. Beispiele für anorganische Inhibitoren sind Stickstoffverbindungen wie Hydroxylamin, Hydrazin, Natriumnitrit und Kaliumnitrit, Salze der phosphorigen Säure wie Natriumhydrogenphosphit sowie schwefelhaltige Verbindungen wie Natriumdithionit, Natriumthiosulfat, Natriumsulfit, Natriumbisulfit, Natriumrhodanid und Ammoniumrhodanid. Beispiele für organische Inhibitoren sind phenolische Verbindungen wie Hydrochinon, Hydrochinonmonomethylether, Resorcin, Brenzkatechin, tert.-Butylbrenzkatechin, Pyrogallol und Kondensationsprodukte aus Phenolen mit Aldehyden. Weitere geeignete organische Inhibitoren sind stickstoffhaltige Verbindungen. Hierzu gehören Hydroxylaminderivate wie beispielsweise N,N-Diethylhydroxylamin, N-Isopropylhydroxylamin sowie sulfonierte oder carboxylierte N-Alkylhydroxylamin- oder N,N-Dialkylhydroxylaminderivate, Hydrazinderivate wie beispielsweise N,N-Hydrazinodiessigsäure, Nitrosoverbindungen wie beispielsweise N-Nitrosophenylhydroxylamin, N-Nitrosophenylhydroxylamin-Ammoniumsalz oder N-Nitrosophenylhydroxylamin-Aluminiumsalz. Die Konzentration des Inhibitors besträgt 5 bis 1000 ppm (bezogen auf die wäßrige Phase), vorzugsweise 10 bis 500 ppm, besonders bevorzugt 10 bis 250 ppm.

Die Polymerisation der verkapselten Monomertröpfchen zum kugelförmigen Polymerisaat erfolgt zweckmäßigerweise in Anwesenheit eines oder mehrerer Schutzkolloide und gegebenenfalls eines Puffersystems in der wäßrigen Phase. Als Schutzkolloide sind natürliche und synthetische wasserlösliche Polymere, wie z.B. Gelatine, Stärke, Polyvinylalkohol, Polyvinylpyrrolidon, Polyacrylsäure, Polymethacrylsäure und Copolymerisate aus (Meth)acrylsäure und (Meth)acrylsäureestern Sehr gut geeignet sind auch Cellulosederivate, insbesondere Celluloseester und Celluloseether, wie Carboxymethylcellulose, Methylhydroxyethylcellulose, Methylhydroxypropylcellulose und Hydroxyethylcellulose. Besonders gut geeignet ist Gelatine. Die Einsatzmenge der Schutzkolloide beträgt im allgemeinen 0,05 bis 1 % bezogen auf die wäßrige Phase, vorzugsweise 0,05 bis 0,5 %.

Die Polymerisation kann in Anwesenheit eines Puffersystem durchgeführt werden. Bevorzugt werden Puffersysteme, die den pH-Wert der wäßrigen Phase bei Beginn der Polymerisation auf einen Wert zwischen 14 und 6, vorzugsweise zwischen 12 und 8 einstellen. Unter diesen Bedingungen liegen Schutzkolloide mit Carbonsäuregruppen ganz oder teilweise als Salze vor. Auf diese Weise wird die Wirkung der Schutzkolloide günstig beeinflußt. Besonders gut geeignete Puffersysteme enthalten Phosphat- oder Boratsalze. Die Begriffe Phosphat und Borat im Sinne der Erfindung umfassen auch die Kondensationsprodukte der ortho-Formen entsprechender Säuren und Salze. Die Konzentration an Phosphat bzw. Borat in der wäßrigen Phase beträgt 0,5 bis 500 mmol/l, vorzugsweise 2,5 bis 100 mmol/l.

Die Rührgeschwindigkeit bei der Polymerisation ist wenig kritisch und hat im Gegensatz zur herkömmlichen Perlpolymerisation keinen Einfluß auf die Teilchengröße. Es werden niedrige Rührgeschwindigkeiten angewendet, die ausreichen, die suspendierten Monomertröpfchen in Schwebe zu halten und die Abführung der Polymerisationswärme zu unterstützen.

Das Volumenverhältnis von verkapselten Monomertröpfchen zur wäßrigen Phase beträgt 1:0,75 bis 1:20, vorzugsweise 1:1 bis 1:6.

Die Polymerisationstemperatur richtet sich nach der Zerfallstemperatur des eingesetzten Initiators. Sie liegt im allgemeinen zwischen 50 bis 150°C, vorzugsweise zwischen 55 und 100°C. Die Polymerisaton dauert 0.5 bis einige Stunden. Es hat sich bewährt, ein Temperaturprogramm anzuwenden, bei dem die Polymerisation bei niedriger Temperatur, z.B. 60°C begonnen wird und mit fortschreitendem Polymerisationsumsatz die Reaktionstemperatur gesteigert wird. Auf diese Weise läßt sich z.B. die Forderung nach sicherem Reaktionsverlauf und hohem Polymerisationsumsatz sehr gut erfüllen. Nach der Polymerisation wird das Polymerisat mit üblichen Methoden, z.B. durch Filtrieren oder Dekantieren, isoliert und gegebenenfalls gewaschen. Der Restwassergehalt des isolierten Polymerisates beträgt je nach Aufarbeitungsart üblicherweise 3 bis 30 %.

Unmittelbar nach Abschluß der Polymerisation wird das Polymerisat getrocknet. Unmittelbar im Sinne der Erfindung bedeutet, daß die Trocknung möglichst direkt im Anschluß erfolgt und die Zeitdauer von zwei Monaten nicht überschreiten soll. Bevorzugt ist eine Trocknung innerhalb von 14 Tagen, besonders bevorzugt innerhalb einer Woche nach Abschluß der Polymerisation.

Die Trocknung erfolgt mit üblichen Trocknern, die es erlauben, einen Restwassergehalt des Polymerisats <1 % zu erzielen. Beispielweise seien Wirbelschichttrockner, Taumeltrockner oder Fließbettrockner genannt; es ist aber auch beispielsweise die Trocknung des Perlpolymerisats in einem Trockenschrank möglich. Die Trockenbedingungen können in weiten Grenzen variiert werden, wobei sie den technischen Gegebenheiten des Trockenaggregats angepaßt sein müssen. So kann die Trocknung bei Atmosphärendruck, aber auch bei reduziertem Druck durchgeführt werden. Bei reduziertem Luftdruck reicht oftmals eine Trockentemperatur von 25°C aus. Trocknungen bei Atmosphärendruck sind bei Temperaturen zwischen 40 und 120°C gut durchführbar. Die Temperatur des feuchten Perlpolymerisats ist bei der Trocknung zunächst niedrig und nähert sich erst mit sinkendem Restfeuchtegehalt der Trockentemperatur an. Bei der Trocknung muß ein Restwassergehalt des Polymerisats <1 Gew.-% erzielt werden, bevorzugt <0,5 Gew.-%, besonders bevorzugt <0,1 Gew.-%, ganz besonders bevorzugt <0,05 Gew.-%. Zur Bestimmung des Restwassergehaltes werden die Perlen in einem Methanol/Formamid-Gemisch (1:1) dispergiert und nach Karl-Fischer-Methode titriert.

Die erfindungsgemäß hergestellten Polymerisate können als Saat in seed/feed-Verfahren eingesetzt werden und besitzen eine hohe Lagerstabilität.

### Beispiele

### Beispiel 1 (erfindungsgemäß)

In einem 2,5 m³ Rührwerksbehälter werden 1185 kg entionisiertes Wasser vorgelegt und eine Lösung aus 2,4 kg Gelatine, 4 kg Natriumhydrogenphosphatdodekahydrat und 190 g Resorcin in 80 kg entionisiertem Wasser hinzugefügt. Unter Rühren wird anschließend eine Mischung aus 715 kg einer mikroverkapselten Mischung mit enger Teilchengrößenverteilung aus 0,5 Gew.-% Divinylbenzol und 0,3 Gew.-% Ethylstyrol (eingesetzt als handelsübliches Isomerengemisch aus Divinylbenzol und Ethylstyrol mit 63 Gew.-% Divinylbenzol), 0,5 Gew.-% tert.Butylperoxy-2-ethylhexanoat und 98,7 Gew.-% Styrol, wobei die Mikrokapsel aus einem mit Formaldehyd gehärteten Komplexkoazervat aus Gelatine und einem Copolymer aus Acrylamid und Acrylsäure besteht, und 715 kg wäßriger Phase mit einem pH-Wert von 12, enthaltend 0,065 Gew.-% Formaldehyd und Natronlauge dazugegeben. Die mittlere Teilchengröße beträgt 231 µm. Der Ansatz wird unter Rühren durch Temperaturerhöhung nach einem Temperaturprogramm bei 25°C beginnend und bei 95°C endend auspolymerisiert und über eine Siebschleuder isoliert. Dabei wird der Feststoff mit 100 kg vollentsalztem Wasser gewaschen und bis auf einen Restwassergehalt von 5 Gew.-% von der wäßrigen Phase befreit. 24 h nach Beendigung der Polymerisation wird das Polymerisat bei 70°C im Taumeltrockner getrocknet. Man erhält 679 kg eines kugelförmigen Polymerisates mit einer mittleren Teilchengröße von 220 µm, enger Teilchengrößenverteilung, glatter Oberfläche und einem Restwassergehalt von 0,05 Gew.-%.

### Beispiel 2 (erfindungsgemäß)

Versuchsdurchführung analog Beispiel 1, jedoch wird als als Monomer eine Mischung aus 1,5 Gew.-% Divinylbenzol und 0,9 Gew.-% Ethylstyrol (eingesetzt als handelsübliches Isomerengemisch aus Divinylbenzol und Ethylstyrol mit 63 Gew.-% Divinylbenzol), 0,5 Gew.-% tert.Butylperoxy-2-ethylhexanoat und 97,1 Gew.-% Styrol eingesetzt. Die mittlere Größe der mikroverkapselten Monomertröpfchen beträgt 285 µm. Man erhält 679 kg eines kugelförmigen Polymerisates mit einer mittleren Teilchengröße von 270 µm, enger Teilchengrößenverteilung, glatter Oberfläche und einem Restwassergehalt von 0,05 Gew.-%.

### Beispiel 3 (erfindungsgemäß)

Versuchsdurchführung analog Beispiel 1, jedoch wird als als Monomer eine Mischung aus 1,5 Gew.-% Divinylbenzol und 0,38 Gew.-% Ethylstyrol (eingesetzt als handelsübliches Isomerengemisch aus Divinylbenzol und Ethylstyrol mit 80 Gew.-% Divinylbenzol), 0,5 Gew.-% tert.Butylperoxy-2-ethylhexanoat und 97,62 Gew.-% Styrol eingesetzt. Die mittlere Größe der mikroverkapselten Monomertröpfchen beträgt 285 µm. Man erhält 679 kg eines kugelförmigen Polymerisates mit einer mittleren Teilchengröße von 270 µm, enger Teilchengrößenverteilung, glatter Oberfläche und einem Restwassergehalt von 0,05 Gew.-%.

### Beispiel 4 (erfindungsgemäß)

Versuchsdurchführung analog Beispiel 1, jedoch wird als als Monomer eine Mischung aus 5,0 Gew.-% Divinylbenzol und 2,9 Gew.-% Ethylstyrol (eingesetzt als handelsübliches Isomerengemisch aus Divinylbenzol und Ethylstyrol mit 63 Gew.-% Divinylbenzol), 0,5 Gew.-% tert.Butylperoxy-2-ethylhexanoat und 91,6 Gew.-% Styrol eingesetzt. Die mittlere Größe der mikroverkapselten Monomertröpfchen beträgt 350 µm. Man erhält 679 kg eines kugelförmigen Polymerisates mit einer mittleren Teilchengröße von 332 µm, enger Teilchengrößenverteilung, glatter Oberfläche und einem Restwassergehalt von 0,05 Gew.-%.

### Beispiel 5 (erfindungsgemäß)

In einem 2,5 m³ Rührwerksbehälter werden 1185 kg entionisiertes Wasser vorgelegt und eine Lösung aus 2,4 kg Gelatine, 4 kg Natriumhydrogenphosphatdodekahydrat und 103 g N,N-Diethylhydroxylamin in 80 kg entionisiertem Wasser hinzugefüllt. Unter Rühren wird anschließend eine Mischung aus 640 kg einer mikroverkapselten Mischung mit enger Teilchengrößenverteilung aus 0,5 Gew.-% Divinylbenzol und 0,3 Gew.-% Etylstyrol (eingesetzt als handelsübliches Isomerengemisch aus Divinylbenzol und Ethylstyrol mit 63 Gew.-% Divinylbenzol), 0,75 Gew.-% Dibenzoylperoxid und 98,45 Gew.-% Styrol, wobei die Mikrokapsel aus einem mit Formaldehyd gehärteten Komplexkoazervat aus Gelatine und einem Copolymer aus Acrylamid und Acrylsäure besteht, und 790 kg wäßriger Phase mit einem pH-Wert von 12, enthaltend 0,065 Gew.-% Formaldehyd und Natronlauge dazugeben. Die mittlere Teilchengröße beträgt 231 µm. Der Ansatz wird unter Rühren durch Temperaturerhöhung nach einem Temperaturprogramm bei 25°C beginnend und bei 95°C endend auspolymerisiert und über eine Siebschleuder isoliert. Dabei wird der Feststoff mit 100 kg vollentsalztem Wasser gewaschen und bis auf einen Restwassergehalt von 7 Gew.-% von der wäßrigen Phase befreit. 24 h nach Beendigung der Polymerisation wird das Polymerisat bei 70°C im Taumeltrockner getrocknet. Man erhält 608 kg eines kugelförmigen Polymerisates mit einer mittleren Teilchengröße von 220 µm, enger Teilchengrößenverteilung, glatter Oberfläche und einem Restwassergehalt von 0,05 Gew.-%.

### Beispiel 6 (Vergleichsbeispiel)

Versuchsdurchführung analog Beispiel 1, jedoch wird das Polymerisat, enthaltend 5 Gew.-% Restwasser, zunächst sechs Wochen gelagert. Danach wird das Polymerisat auf einen Restwassergehalt von 0,05 Gew.-% getrocknet. Man erhält 679 kg eines kugelförmigen Polymerisates mit einer mittleren Teilchengröße von 220 µm, enger Teilchengrößenverteilung und glatter Oberfläche.

### Beispiel 7 (Vergleichsbeispiel)

Versuchsdurchführung analog Beispiel 2. Wiederum wird das Polymerisat, enthaltend 5 Gew.-% Restwasser, zunächst sechs Wochen gelagert und erst danach auf einen Restwassergehalt von 0,05 Gew.-% getrocknet. Man erhält 679 kg eines kugelförmigen, mikroverkapselten Polymerisates mit einer mittleren Teilchengröße von 270 µm, enger Teilchengrößenverteilung und glatter Oberflächen.

### Bewertung der getrockneten kugelförmigen Perlpolymerisate aus den Beispielen 1-7

In den Beispielen 1 bis 7 ist die Herstellung von getrockneten, kugelförmigen Perlpolymerisaten beschrieben. Zur Überprüfung deren Lagerstabilität wird das verkapselte Polymerisat einen Tag sowie 12 Wochen nach der Trocknung auf einen Restwassergehalt <1 Gew.-% als Saat in einem seed/feed-Verfahren eingesetzt und die Oberflächenqualität des entstehenden Polymerisats beurteilt.

Das seed/feed-Verfahren wird wie folgt durchgeführt:

9,3 g Dinatriumhydrogenphosphatdodekahydrat werden in einem 4 l Glasreaktor in 1100 ml entionisiertem Wasser gelöst. In diese Lösung werden x Gew.-% von 1200 g kugelförmigen Perlpolymerisates dispergiert. Danach wird innerhalb von 30 min 100 bis x Gew.-% von 1200 g einer Mischung, bestehend aus 88,19 Gew.-% Styrol, 11,01 Gew.-% Divinylbenzol (80 %ig, handelsübliches Gemisch aus Divinylbenzol und Ethylbenzol) und 0,8 Gew.-% Dibenzoylperoxid (75 %ig, handelsübliche wasserfeuchte Qualität) zudosiert und anschließend 1 h gerührt. Nach dieser Zeit werden 122 ml einer 2 gew.-%igen wäßrigen Methylhydroxypropylcelluloselösung (Culminal MHEC 8000, Fa. Aqualon) hinzugefügt. Der Ansatz wird durch Temperaturerhöhung nach einem Temperaturprogramm bei 25°C beginnend und bei 95°C endend auspolymerisiert, abgekühlt, über ein 32 µm-Sieb gewaschen und getrocknet.

| **Beispiel** | **1** | **2** | **3** | **4** | **5** | **6** | **7** |
|---|---|---|---|---|---|---|---|
| **x** | 15,9 | 28,6 | 28,6 | 52,6 | 15,9 | 15,9 | 28,6 |

| **Oberflächenqualität der Perlpolymerisate bei seed/feed-Polymerisation nach einem Tag** | | | | | | | |
|---|---|---|---|---|---|---|---|
| Beobachtung | glatt | glatt | glatt | glatt | glatt | mehrere tropfenartige Beläge an der Oberfläche zahlreicher Perlen | mehrere tropfenartige Beläge an der Oberfläche zahlreicher Perlen |
| **Anzahl der Perlen mit mindestens 20 tropfenartigen Belägen (Durchmesser mind. 3 µm)** | 0% | 0% | 0% | 0% | 0% | > 50% | > 50% |

| **Oberflächenqualität der Perlpolymerisate bei seed/feed-Polymerisation nach 12 Wochen** | | | | | | | |
|---|---|---|---|---|---|---|---|
| **Beobachtung** | glatt | glatt | glatt | glatt | glatt | mehrere tropfenartige Beläge an der Oberfläche zahlreicher Perlen | mehrere tropfenartige Beläge an der Oberfläche zahlreicher Perlen |
| **Anzahl der Perlen mit mindestens 20 tropfenartigen Belägen (Durchmesser mind. 3 µm)** | 0% | 0% | 0% | 0% | 0% | > 50% | > 50% |

Ein Vergleich der Beispiele 1 bis 5 mit den Beispielen 6 und 7 zeigt deutlich, daß die Perlpolymerisate, die aus Saat hergestellt wurden, deren Restwasser nach der Produktion nicht unter 1 Gew.-% lag, sondern die mit einem Restwassergehalt von 5 Gew.-% zunächst eingelagert und erst vor dem seed/feed-Verfahren auf 0,05 Gew.-% Restwasser getrocknet wurde, deutlich mehr Beläge an den Perlenoberflächen aufweisen, als Polymerisate deren Saat sofort nach der Produktion aufeinen Restwassergehalt <1 Gew-% getrocknet wurde.

## Patentansprüche

1. Verfahren zur Herstellung von lagerstabilen kugelförmigen Polymerisaten durch Polymerisation von gelatineverkapselten Monomertröpfchen in einer wäßrigen Phase, dadurch gekennzeichnet, daß das Polymerisat unmittelbar nach der Polymerisation auf einen Restwassergehalt <1 Gew.-% getrocknet wird.

2. Verfahren gemäß Anspruch 1, dadurch gekennzeichnet, daß man die Trocknung in einem Wirbelschichttrockner, Taumeltrockner, Fließbett-Trockner oder Trockenschrank durchführt.

3. Verfahren gemäß Anspruch 1, dadurch gekennzeichnet, daß die Trocknung bei Atmosphärendruck oder reduziertem Luftdruck durchgeführt wird.

4. Verfahren gemäß Anspruch 3, dadurch gekennzeichnet, daß die Trocknung bei Atmosphärendruck bei einer Temperatur zwischen 40 und 120°C durchgeführt wird.

5. Lagerstabile, kugelförmige Polymerisate, dadurch gekennzeichnet, daß die Polymerisate mit Gelatine verkapselt sind und der Restwassergehalt <1 Gew.-%, liegt.
